# EUROPÄISCHE PATENTSCHRIFT

(11) **EP 2 936 100 B1**
(45) Veröffentlichungstag und Bekanntmachung des Hinweises auf die Patenterteilung: **11.09.2019**
(21) Anmeldenummer: 13814473.8
(22) Anmeldetag: 06.12.2013
(51) Int. Cl.: G01L 9/00, G01L 13/06, G01L 13/02, G01L 19/00

(54) **HYDRAULISCHES MESSWERK MIT KOPLANAREN DRUCKEINGÄNGEN UND DIFFERENZDRUCKSENSOR MIT EINEM SOLCHEN MESSWERK**
HYDRAULIC MEASURING UNIT WITH COPLANAR PRESSURE INLETS AND DIFFERENTIAL PRESSURE SENSOR HAVING SUCH A MEASURING UNIT
ÉLÉMENT DE MESURE HYDRAULIQUE POURVU D'ENTRÉES DE PRESSION COPLANAIRES ET CAPTEUR DE PRESSION DIFFÉRENTIELLE POURVU D'UN TEL ÉLÉMENT DE MESURE

(30) Priorität: 21.12.2012 DE 102012113042
(43) Veröffentlichungstag der Anmeldung: 28.10.2015
(73) Patentinhaber: Endress+Hauser SE+Co. KG, 79689 Maulburg (DE)
(72) Erfinder: LEMKE, Benjamin, 12051 Berlin (DE); NOACK, Michael, D-14547 Beelitz (DE); TEIPEN, Rafael, 10407 Berlin (DE); THAM, Anh Tuan, 14089 Berlin (DE)
(74) Vertreter: Andres, Angelika Maria
(86) Internationale Anmeldenummer: PCT/EP2013/075747
(87) Internationale Veröffentlichungsnummer: WO 2014/095413

(56) Entgegenhaltungen:
- WO-A1-83/02004
- WO-A1-88/09921
- US-A1- 2012 079 884

## Beschreibung

Die vorliegende Erfindung betrifft ein hydraulisches Messwerk zum Aufnehmen von Differenzdrücken und einen Differenzdrucksensor mit einem solchen Messwerk. Hydraulische Messwerke zum Aufnehmen von Differenzdrücken, umfassen gewöhnlich einen Messwerkkörper mit einer ersten Druckeingangsöffnung und einer zweiten Druckeingangsöffnung, von der sich jeweils ein hydraulischer Pfad zu einer Differenzdruckmesszelle erstreckt, um die Differenzdruckmesszelle mit dem ersten Druck und dem zweiten Druck zu beaufschlagen, deren Differenz durch die Differenzdruckmesszelle zu messen ist. Eine Differenzdruckmesszelle weist allgemein einen Messzellenkörper mit zwei Messkammern in seinem Innern auf, die durch eine Messmembran voneinander getrennt sind. Die beiden Messkammern sind jeweils durch eine Messkammeröffnung mit einem der beiden Drücke beaufschlagbar, so dass die Messmembran eine von der Differenz der beiden Drücke abhängige, elastische Verformung aufweist.

Die Druckeingangsöffnungen des Messwerkkörpers sind gewöhnlich durch flexible metallische Trennmembranen verschlossen, welche jeweils einen an einer Außenseite der Trennmembran anstehenden Druck in den hydraulischen Pfad einleiten. Bei Messwerken mit koplanaren Druckeingangsöffnungen liegen die Druckeingänge nebeneinander auf einer Prozessanschlussfläche des Messwerkkörpers. Solche Messwerke mit koplanaren Druckeingängen sind beispielsweise in EP 0 370 013 B1, EP 0 560 875 B1, EP 0 774 652 B2, und EP 1 216 404 B1 offenbart. Die hydraulischen Pfade umfassen beispielsweise Kapillarleitungen, die sich von einer rückseitigen Oberfläche des Prozessanschlusskörpes, welche der Prozessanschlussfläche abgewandt ist, zur Druckmesszelle erstrecken.

Die Kapillarleitungen sind beispielsweise durch eine umlaufende Schweißnaht druckdicht mit dem Messwerkkörper verbunden und damit jeweils an eine der Druckeingangsöffnungen hydraulisch gekoppelt.

Die Präparation der umlaufenden Schweißnähte erweist sich jedoch als schwierig, da die benachbarten Kapillarrohre das Umkreisen des jeweils anderen Kapillarrohrs mit einer Schweißvorrichtung behindern.

Es ist daher die Aufgabe der vorliegenden Erfindung, ein hydraulisches Messwerk mit koplanaren Druckeingängen und einen Differenzdrucksensor mit einem solchen Messwerk bereitzustellen, welches einfach und zuverlässig herzustellen ist.

Die Aufgabe wird erfindungsgemäß gelöst durch das Messwerk gemäß dem unabhängigen Patentanspruch 1 und den Differenzdrucksensor gemäß dem unabhängigen Patentanspruch 6.

Das erfindungsgemäße hydraulische Messwerk zum Aufnehmen von Differenzdrücken, umfasst: einen Messwerkkörper mit einer im wesentlichen in eine Richtung orientierten Prozessanschlussfläche, wobei der Messwerkkörper eine erste Druckeingangsöffnung aufweist, die sich von der Prozessanschlussfläche durch den Messwerkkörper zu einer rückseitigen Oberfläche des Messwerkkörpers erstreckt, wobei der Messwerkkörper eine zweite Druckeingangsöffnung aufweist, die sich von der Prozessanschlussfläche durch den Messwerkkörper zu der rückseitigen Oberfläche des Messwerkkörpers erstreckt; eine erste Trennmembran, welche die erste Druckeingangsöffnung auf der Seite der Prozessanschlussfläche verschließt; eine zweite Trennmembran, welche die zweite Druckeingangsöffnung auf der Seite der Prozessanschlussfläche verschließt; ein erstes Druckrohr, welches mit einem Abschnitt in der ersten Druckeingangsöffnung angeordnet ist, wobei das erste Druckrohr aus der rückseitigen Oberfläche des Messwerkkörpers herausragt; und ein zweites Druckrohr, welches mit einem Abschnitt in der zweiten Druckeingangsöffnung angeordnet ist, wobei das erste Druckrohr aus der rückseitigen Oberfläche des Messwerkkörpers herausragt; wobei das erste und das zweite Druckrohr druckdicht mit dem Messwerkkörper verbunden sind, dadurch gekennzeichnet, dass mindestens das erste Druckrohr von der Seite der Prozessanschlussfläche her druckdicht mit dem Messwerkkörper verbunden ist.

Dabei sind das erste Druckrohr und das zweite Druckrohr von der Seite der Prozessanschlussfläche her druckdicht mit dem Messwerkkörper verbunden.

Das erste Druckrohr und das zweite Druckrohr sind durch Fügen, insbesondere Schweißen druckdicht mit dem Messwerkkörper verbunden.

Durch das Herstellen der druckdichten Verbindung zwischen einem Druckrohr und dem Messwerkkörper von der Seite der Prozessanschlussfläche her, werden insbesondere umlaufende Verbindungsverfahren wie beispielsweise Schweißen nicht durch das jeweils andere Rohr, welches rückseitig aus dem Messwerkkörper herausragt, behindert.

Gemäß einer Weiterbildung der Erfindung verläuft mindestens ein Druckrohr bezüglich einer Oberflächennormalen der Prozessanschlussfläche geneigt in dem Messwerkkörper.

Auf diese Weise kann insbesondere der Abstand der rückseitigen Endabschnitte der Druckrohre zueinander verringert werden, was insbesondere für die Montage von miniaturisierten Differenzdruckmesszellen vorteilhaft sein kann.

Gemäß einer Weiterbildung der Erfindung umfasst das hydraulische Messwerk weiterhin mindestens einen ersten Membranbettkörper, welcher an einer dem Messwerkkörper abgewandten Oberfläche ein korrugiertes Membranbett aufweist, wobei der Membranbettkörper nach dem druckdichten Verbinden des mindestens einen ersten Druckrohrs mit dem Messwerkkörper von der Seite der Prozessanschlussfläche her druckdicht mit dem Messwerkkörper verbunden ist.

Gemäß einer Weiterbildung der Erfindung ist mindestens eine Trennmembran auf dem Membranbett eines Trennmembrankörpers abgeprägt.

Der Einsatz eines Membranbettkörpers ermöglicht die Bereitstellung eines Membranbetts, ohne dass dieses durch die präparierte Druckdichte Verbindung zwischen Druckrohr und Messwerkkörper in seiner Integrität beeinträchtigt würde.

Gemäß einer anderen Weiterbildung der Erfindung ist zwischen mindestens einer Trennmembran und der von ihr verschlossenen Druckeingangsöffnung kein korrugiertes Membranbett vorhanden. Auf ein Membranbett kann verzichtet werden, wenn eine überlastfeste Differenzdruckmesszelle zum Einsatz kommt, so dass kein Schutz der Differenzdruckmesszelle durch eine zur Anlage kommenden Überlastmembran erforderlich ist.

Der erfindungsgemäße Differenzdrucksensor umfasst ein erfindungsgemäßes hydraulisches Messwerk; und eine Differenzdruckmesszelle, wobei die Differenzdruckmesszelle einen Messzellenkörper mit zwei Messkammern in seinem Innern aufweist, die durch eine Messmembran voneinander getrennt sind, wobei die Messkammern jeweils eine Messkammeröffnung aufweisen, wobei eine erste der Messkammern druckdicht an das erste Druckrohr angeschlossen und durch das erste Druckrohr mit einem ersten Druck beaufschlagbar ist, wobei eine zweite der Messkammern druckdicht an das zweite Druckrohr angeschlossen und durch das zweite Druckrohr mit einem zweiten Druck beaufschlagbar ist, wobei die Messmembran in Abhängigkeit von einer Differenz zwischen dem ersten Druck und dem zweiten Druck elastisch verformbar ist, wobei die Differenzdruckmesszelle einen Wandler aufweist, zum Bereitstellen eines von der Verformung der Messmembran abhängigen Signals.

Gemäß einer Weiterbildung der Erfindung wird die Differenzdruckmesszelle von den Druckrohren gehalten.

Gemäß einer Weiterbildung der Erfindung weisen die beiden Druckrohre jeweils eine Verzweigung auf, wobei jeweils ein Zweig eines Druckrohrs an eine der Messkammern angeschlossen ist, und wobei der jeweils andere Zweig eines Druckrohrs eine verschließbare Befüllöffnung zum Befüllen der jeweils mit dem Zweig kommunizierenden Volumina des Differenzdrucksensors mit einer Übertragungsflüssigkeit aufweist.

Gemäß einer anderen Weiterbildung der Erfindung weist der Messwerkkörper zwei verschließbare Befüllöffnungen auf, von denen jeweils eine mit einer Druckeingangsöffnung kommuniziert, wobei die Beffüllöffnungen vorgesehen sind zum Befüllen der jeweils mit ihnen kommunizierenden Volumina des Differenzdrucksensors mit einer Übertragungsflüssigkeit.

Die Erfindung wird nun anhand der in den Zeichnungen dargestellten Ausführungsbeispiele erläutert. Es zeigt:
- Fig. 1:: einen schematischen Längsschnitt durch ein erstes Ausführungsbeispiel eines erfindungsgemäßen Differenzdrucksensors;
- Fig. 2:: einen schematischen Längsschnitt durch ein zweites Ausführungsbeispiel eines erfindungsgemäßen Differenzdrucksensors;
- Fig. 3:: einen schematischen Längsschnitt durch ein drittes Ausführungsbeispiel eines erfindungsgemäßen Differenzdrucksensors; und
- Fig. 4:: einen schematischen Längsschnitt durch ein viertes Ausführungsbeispiel eines erfindungsgemäßen Differenzdrucksensors;

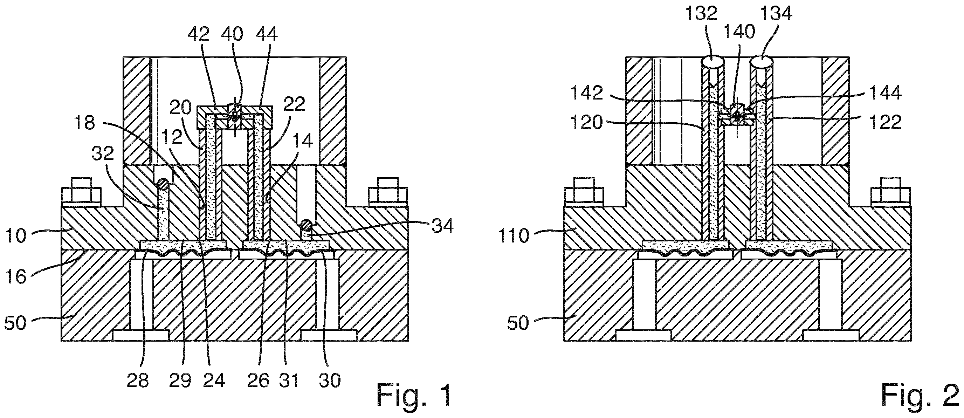

Das in Fig. 1 gezeigte Ausführungsbeispiel eines erfindungsgemäßen Differenzdrucksensors umfasst einen Messwerkkörper 10, durch welchen sich eine erste und eine zweite Druckeingangsöffnung 12, 14, als Gerade Bohrungen von einer Prozessanschlussfläche 16 des Messwerkkörpers 10 zu einer Rückseite 18 des Messwerkkörpers 10 erstrecken. In die Bohrungen sind erste und zweite Kapillarrohre 20, 22 eingesetzt, die rückseitig aus dem Messwerkkörper herausragen und auf der Seite der Prozessanschlussfläche 16 mit umlaufenden Schweißnähten 24, 26 druckdicht mit dem Messwerkkörper verbunden sind. Die beiden Druckeingangsöffnungen 12, 14 sind jeweils mit einer ersten bzw. zweiten Trennmembran 28, 30 verschlossen, wobei die Trennmembranen jeweils entlang einer umlaufenden Schweißnaht druckdicht mit der Prozessanschlussfläche 16 des Messwerkkörpers 10 verbunden sind. Von den Trennmembranen 28, 30 überdeckte erste und zweite Vertiefungen 29, 30, weisen im wesentlichen eine flache Grundfläche auf. D.h. es ist kein Membranbett vorgesehen, an denen eine Trennmembran abgestützt wird, wenn sie im Überlastfall zur Anlage kommt. Auf diese Maßnahme kann vorliegend verzichtet werden, da der Differenzdrucksensor eine überlastfeste Differenzdruckmesszelle 40 aufweist, deren Festigkeit noch durch zwei keramische Versteifungskörper 42, 44 aus Siliziumnitrid oder Aluminiumnitrid erhöht wird, die beidseitig der Differenzdruckmesszelle 40 mittels Glaslot mit der Differenzdruckmesszelle gefügt sind. Die Differenzdruckmesszelle ist insbesondere eine mikromechanische Differenzdruckmesszelle, die Silizium als Werkstoff aufweist und einen kapazitiven Wandler umfasst. Die Differenzdruckmesszelle 40, kommuniziert durch Kanäle, die durch die Versteifungsköärper 42, 44 laufen mit den beiden Druckrohren 20, 22, wobei die Versteifungskörper 42, 44 jeweils druckdicht und drucktragend auf rückseitige Stirnflächen der Druckrohre 20, 22 geklebt oder gelötet sind.

Durch den Messwerkkörper 10 erstrecken sich von dessen Rückseite 18 zudem erste und zweite Befüllkanäle 32 34 die jeweils in einer der Vertiefungen 29, 31 in der Prozessanschlussfläche münden. Über diese Befüllkanäle werden die mit Ihnen kommunizierenden Teilvolumina des hydraulischen Systems des Differenzdrucksensors mit einer Übertragungsflüssigkeit gefüllt. Anschließend werden die Befüllkanäle 32, 34 druckdicht verschlossen.

Der Differenzdrucksensor ist mit seiner Prozessanschlussfläche voran an einem Prozessanschlussblock 50 mittels Bolzen fixiert.

Das zweite Ausführungsbeispiel eines Differenzdrucksensors gemäß Fig. 2 unterscheidet sich vom zuvor beschriebenen Ausführungsbeispiel durch die folgenden Einzelheiten: Eine Messwerkkörper 110 weist keine gesonderten Befüllkanäle auf. Stattdessen weisen erste und zweite Druckrohre 120, 122, die wiederum von der Seite einer Prozessanschlussfläche des Messwerkkörpers her 110 druckdicht mit dem Messwerkkörper verbunden sind, rückseitige, verschließbare Befüllöffnungen 132, 134 auf. Zur Druckbeaufschlagung einer Differenzdruckmesszelle 140, die zwischen keramischen Versteifungskörpern 142, 144 gehalten ist, die wiederum zwischen den Druckrohren 120, 122 angeordnet und mit diesen verlötet sind, weisen die Druckrohre seitliche Verzweigungsbohrungen auf, die Kanälen durch die Versteifungskörper 142, 144 kommunizieren.

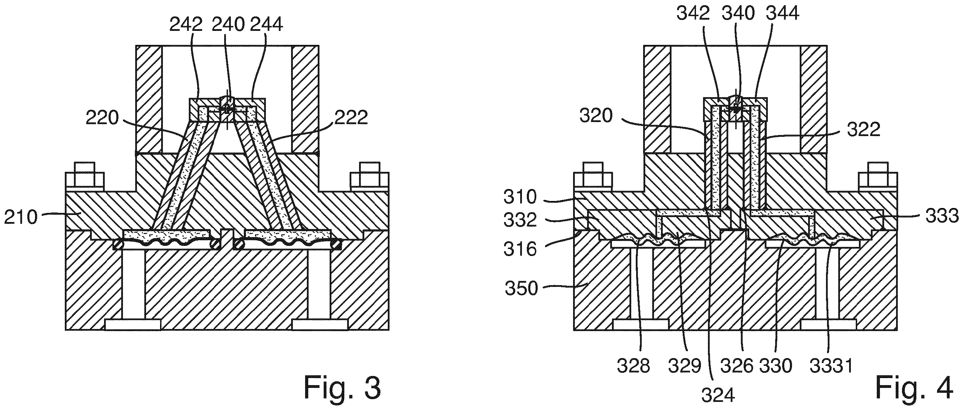

In Fig. 3 ist ein Ausführungsbeispiel eines Differenzdrucksensors dargestellt, bei dem ein Messwerkkörper 210 geneigt verlaufende Druckeingangsöffnungen aufweist, in welche gerade erste und zweite Druckrohre 220, 220 eingesetzt sind, auf deren rückseitigen Stirnflächen wiederum eine mikromechanische Differenzdruckmesszelle 240 mittels zweier Versteifungskörper 242, 244 gehalten ist. Die Neigung der Druckrohre ermöglicht es, den Abstand der rückseitigen Stirnflächen, auf denen die Versteifungskörper 242, 244 zu montieren sind, unabhängig von Erfordernissen für den Abstand zwischen den Druckeingangsöffnungen an der Prozessanschlussfläche zu gestalten.

Fig 4 zeigt schließlich ein Ausführungsbeispiel eines Differenzdrucksensors der ein hydraulische Messwerk aufweist, in dem ein gewisser Überlastschutz realisiert ist. Einen Messwerkkörper 310 weist, Druckeingangsöffnungen her in denen von der Seite einer Prozessanschlussfläche 316 her Druckrohre 320, 322 mit umlaufenden Fügestellen 324, 326 druckdicht fixiert sind.

Die Fügestellen sind jedoch von scheibenförmigen Trennmembrankörpern 332,333 überdeckt, wobei letztere mit dem Messwerkkörper entlang umlaufender Schweißnähte druckdicht verbunden sind. Trennmembranen 328, 330 sind an den Trennmembranbetten jeweils mit einer umlaufenden Schweißnaht druckdicht befestigt, wobei die Trennmembranen 328, 330 auf Membranbetten 329, 331 an der trennmembranseitigen Oberfläche der Trennmembrankörper abgeprägt sind. Im Falle einer einseitigen Überlast im Betrieb des Differenzdrucksensors kann eine Trennmembran an ihrem jeweiligen Membranbett 329, 331 zur Anlage kommen, wodurch ein weiterer Druckanstieg hinter der Trennmembran verhindert ist. Auf diese Weise wird eine auf den Druckrohren 320, 322 mittels Versteifungskörpern 342, 344 montierte Differenzdruckmesszelle 340 vor unbegrenzt steigenden Drücken geschützt.

## Patentansprüche

1. Hydraulisches Messwerk zum Aufnehmen von Differenzdrücken, umfassend:
einen Messwerkkörper (10; 110; 210; 310) mit einer im wesentlichen in eine Richtung orientierten Prozessanschlussfläche (16; 116; 216; 316),
wobei der Messwerkkörper (10; 110; 210; 310) eine erste Druckeingangsöffnung (12) aufweist, die sich von der Prozessanschlussfläche (16; 116; 216; 316) durch den Messwerkkörper (10; 110; 210; 310) zu einer rückseitigen Oberfläche des Messwerkkörpers (10; 110; 210; 310) erstreckt,
wobei der Messwerkkörper (10; 110; 210; 310) eine zweite Druckeingangsöffnung aufweist, die sich von der Prozessanschlussfläche (16; 116; 216; 316) durch den Messwerkkörper (10; 110; 210; 310) zu der rückseitigen Oberfläche des Messwerkkörpers (10; 110; 210; 310) erstreckt;
eine erste Trennmembran (28; 328), welche die erste Druckeingangsöffnung auf der Seite der Prozessanschlussfläche (16; 116; 216; 316) verschließt;
eine zweite Trennmembran (30; 330), welche die zweite Druckeingangsöffnung auf der Seite der Prozessanschlussfläche (16; 116; 216; 316) verschließt;
ein erstes Druckrohr (20; 120; 220; 320), welches mit einem Abschnitt in der ersten Druckeingangsöffnung angeordnet ist, wobei das erste Druckrohr aus der rückseitigen Oberfläche des Messwerkkörpers (10; 110; 210; 310) herausragt; und
ein zweites Druckrohr (22; 122; 222; 322), welches mit einem Abschnitt in der zweiten Druckeingangsöffnung angeordnet ist, wobei das zweite Druckrohr (22; 122; 222; 322) aus der rückseitigen Oberfläche des Messwerkkörpers (10; 110; 210; 310) herausragt;
wobei das erste und das zweite Druckrohr druckdicht mit dem Messwerkkörper (10; 110; 210; 310) verbunden sind,
**dadurch gekennzeichnet, dass** das erste Druckrohr (20; 120; 220; 320) und das zweite Druckrohr (22; 122; 222; 322) von der Seite der Prozessanschlussfläche (16; 116; 216; 316) her druckdicht mit dem Messwerkkörper (10; 110; 210; 310) verbunden sind, wobei das erste Druckrohr (20; 120; 220; 320) und das zweite Druckrohr (22; 122; 222; 322) durch Schweißen mit jeweils einer auf der Seite der Prozessanschlussfläche (16; 116; 216; 316) umlaufenden Schweißnaht (24, 26) druckdicht mit dem Messwerkkörper (10; 110; 210; 310) verbunden sind.

2. Hydraulisches Messwerk nach Anspruch 1, wobei mindestens ein Druckrohr (220, 222) bezüglich einer Oberflächennormalen der Prozessanschlussfläche (216) geneigt in dem Messwerkkörper (210) verläuft.

3. Hydraulisches Messwerk nach einem der vorhergehenden Ansprüche, weiterhin umfassend:
mindestens einen ersten Membranbettkörper (332, 333), welcher an einer dem Messwerkkörper (310) abgewandten Oberfläche ein korrugiertes Membranbett aufweist, wobei der Membranbettkörper nach dem druckdichten Verbinden des mindestens einen ersten Druckrohrs (320) mit dem Messwerkkörper (310) von der Seite der Prozessanschlussfläche (316) her druckdicht mit dem Messwerkkörper (310) verbunden ist.

4. Hydraulisches Messwerk, nach Anspruch 3, wobei mindestens eine Trennmembran (328, 330) auf dem Membranbett eines Trennmembrankörpers (332,333) abgeprägt ist.

5. Hydraulisches Messwerk nach einem der Ansprüche 1 bis 2, wobei zwischen mindestens einer Trennmembran (28, 30) und der von ihr verschlossenen Druckeingangsöffnung (12, 14) kein korrugiertes Membranbett vorhanden ist.

6. Differenzdrucksensor umfassend:
ein Hydraulisches Messwerk nach einem der vorhergehenden Ansprüche; und
eine Differenzdruckmesszelle (40; 140; 240; 340),
wobei die Differenzdruckmesszelle (40; 140; 240; 340) einen Messzellenkörper mit zwei Messkammern in seinem Innern aufweist, die durch eine Messmembran voneinander getrennt sind,
wobei die Messkammern jeweils eine Messkammeröffnung aufweisen,
wobei eine erste der Messkammern druckdicht an das erste Druckrohr (20; 120; 220; 320) angeschlossen und durch das erste Druckrohr (20; 120; 220; 320) mit einem ersten Druck beaufschlagbar ist,
wobei eine zweite der Messkammern druckdicht an das zweite Druckrohr angeschlossen und durch das zweite Druckrohr mit einem zweiten Druck beaufschlagbar ist,
wobei die Messmembran in Abhängigkeit von einer Differenz zwischen dem ersten Druck und dem zweiten Druck elastisch verformbar ist,
wobei die Differenzdruckmesszelle (40; 140; 240; 340) einen Wandler aufweist, zum Bereitstellen eines von der Verformung der Messmembran abhängigen Signals.

7. Differenzdrucksensor nach Anspruch 6, wobei die Differenzdruckmesszelle (40; 140; 240; 340) von den Druckrohren gehalten wird.

8. Differenzdrucksensor nach Anspruch 6 oder 7, wobei die beiden Druckrohre (120, 122) jeweils eine Verzweigung aufweisen, wobei jeweils ein Zweig eines Druckrohrs (120, 122) an eine der Messkammern angeschlossen ist, und wobei der jeweils andere Zweig eines Druckrohrs eine verschließbare Befüllöffnung (132, 134) zum Befüllen der jeweils mit dem Zweig kommunizierenden Volumina des Differenzdrucksensors mit einer Übertragungsflüssigkeit aufweist.

9. Differenzdrucksensor nach Anspruch 6 oder 7, wobei der Messwerkkörper (10) zwei verschließbare Befüllöffnungen (32, 34) aufweist, von denen jeweils eine mit einer Druckeingangsöffnung kommuniziert, wobei die Befüllöffnungen vorgesehen sind zum Befüllen der jeweils mit ihnen kommunizierenden Volumina des Differenzdrucksensors mit einer Übertragungsflüssigkeit.

## Claims

1. Hydraulic measuring unit designed to record differential pressures, comprising;
- a measuring unit body (10, 110, 210, 310) with a process connection surface (16, 116, 216, 316) oriented in essentially one direction,
wherein the measuring unit body (10, 110, 210, 310) has a first pressure entry opening (12) which extends from the process connection surface (16, 116, 216, 316) through the measuring unit body (10, 110, 210, 310) to a rear surface of the measuring unit body (10, 110, 210, 310);
wherein the measuring unit body (10, 110, 210, 310) has a second pressure entry opening (14) which extends from the process connection surface (16, 116, 216, 316) through the measuring unit body (10, 110, 210, 310) to the rear surface of the measuring unit body (10, 110, 210, 310);
- a first process isolating diaphragm (28, 328), which seals the first pressure entry opening on the side of the process connection surface (16, 116, 216, 316);
- a second process isolating diaphragm (30, 330), which seals the second pressure entry opening on the side of the process connection surface (16, 116, 216, 316);
- a first pressure tube (20, 120, 220, 320), which is arranged with a section in the first pressure entry opening, wherein the first pressure tube (20, 120, 220, 320) projects out of the rear surface of the measuring unit body (10, 110, 210, 310); and
- a second pressure tube (22, 122, 222, 322), which is arranged with a section in the second pressure entry opening, wherein the second pressure tube (22, 122, 222, 322) projects out of the rear surface of the measuring unit body (10, 110, 210, 310);
wherein the first and second pressure tube are connected in a pressure-tight manner with the measuring unit body (10, 110, 210, 310),
**characterized in that**
the first pressure tube (20, 120, 220, 320) and the second pressure tube (22, 122, 222, 322) are connected with measuring unit body (10, 110, 210, 310) in a pressure-tight manner from the side of the process connection surface (16, 116, 216, 316), wherein the first pressure tube (20, 120, 220, 320) and the second pressure tube (22, 122, 222, 322) are connected with the measuring unit body (10, 110, 210, 310) in a pressure-tight manner by welding with a peripheral welding seam (24, 26) on the side of the process connection surface (16, 116, 216, 316).

2. Hydraulic measuring unit as claimed in Claim 1, wherein at least one pressure tube (220, 222) extends at an angle in the measuring unit body (210) in relation to the surface normal of the process connection surface (216).

3. Hydraulic measuring unit as claimed in one of the previous claims, further comprising:
at least a first diaphragm bed body (332, 333), which features a corrugated diaphragm bed on a surface facing away from the measuring unit body (310), wherein, following the pressure-tight connection of the at least first pressure tube (320) with the measuring unit body (310) from the side of the process connection surface (316), the diaphragm bed body is connected in a pressure-tight manner with the measuring unit body (310).

4. Hydraulic measuring unit as claimed in Claim 3, wherein at least one process isolating diaphragm (328, 330) is impressed on the diaphragm bed of a process isolating diaphragm body (332, 333).

5. Hydraulic measuring unit as claimed in Claims 1 to 2, wherein no corrugated diaphragm bed is located between a process isolating diaphragm (28, 30) and the pressure entry opening (12, 14) which the diaphragm seals.

6. Differential pressure sensor comprising:
a hydraulic measuring unit as claimed in one of the previous claims; and a differential pressure measuring cell (40, 140, 240, 340),
wherein the differential pressure measuring cell (40, 140, 240, 340) has a measuring cell body with two measuring chambers in the interior, said chambers being separated from one another by an isolating diaphragm,
wherein the measuring chambers each has a measuring chamber opening,
wherein a first of the measuring chambers is connected to the first pressure tube (20, 120, 220, 320) in a pressure-tight manner and can be subjected to a first pressure by means of the first pressure tube (20, 120, 220, 320),
wherein a second of the measuring chambers is connected to the second pressure tube in a pressure-tight manner and can be subjected to a second pressure by means of the second pressure tube,
wherein the process isolating diaphragm can be deformed elastically depending on a difference between the first pressure and the second pressure,
wherein the differential pressure measuring cell (40, 140, 240, 340) has a converter for the provision of a signal that depends on the deformation of the process isolating diaphragm.

7. Differential pressure sensor as claimed in Claim 6, wherein the differential pressure measuring cell (40, 140, 240, 340) is supported by the pressure tubes.

8. Differential pressure sensor as claimed in Claim 6 or 7, wherein the two pressure tubes (120, 122) each has a junction, wherein, in each case, one branch of a pressure tube (120, 122) is connected to one of the measuring chambers, and wherein the other branch of a pressure tube has a sealable fill opening (132, 134) to fill the volume of the differential pressure sensor that communicates with the branch with transmission liquid.

9. Differential pressure sensor as claimed in Claim 6 or 7, wherein the measuring unit body (10) has two sealable fill openings (32, 34), wherein one of these openings communicates with the pressure entry opening, wherein the fill openings are provided to fill the volume of the differential pressure sensor that communicates with the opening with transmission liquid.

## Revendications

1. Système de mesure hydraulique destiné à l'enregistrement de pressions différentielles, comprenant ;
- un corps de système de mesure (10, 110, 210, 310) avec une surface de raccord process (16, 116, 216, 316) orientée pour l'essentiel dans une direction, le corps de système de mesure (10, 110, 210, 310) présentant une première ouverture d'entrée de pression (12), qui s'étend de la surface de raccord process (16, 116, 216, 316) à travers le corps de système de mesure (10, 110, 210, 310) vers la surface arrière du corps de système de mesure (10, 110, 210, 310) ;
le corps de système de mesure (10, 110, 210, 310) présentant une deuxième ouverture d'entrée de pression (14), qui s'étend de la surface de raccord process (16, 116, 216, 316) à travers le corps de système de mesure (10, 110, 210, 310) vers la surface arrière du corps de système de mesure (10, 110, 210, 310) ;
- une première membrane de séparation (28, 328), laquelle obture la première ouverture d'entrée de pression sur le côté de la surface de raccord process (16, 116, 216, 316) ;
- une deuxième membrane de séparation (30, 330), laquelle obture la deuxième ouverture d'entrée de pression sur le côté de la surface de raccord process (16, 116, 216, 316) ;
- un premier tube de pression (20, 120, 220, 320), dont un segment est disposé dans la première ouverture d'entrée de pression, le premier tube de pression (20, 120, 220, 320) débordant de la surface arrière du corps de système de mesure (10, 110, 210, 310) ; et
- un deuxième tube de pression (22, 122, 222, 322), dont un segment est disposé dans la deuxième ouverture d'entrée de pression, le deuxième tube de pression (22, 122, 222, 322) débordant de la surface arrière du corps de système de mesure (10, 110, 210, 310) ;
le premier et le deuxième tube de pression étant reliés de façon étanche à la pression avec le corps de système de mesure (10, 110, 210, 310),
**caractérisé**
**en ce que** le premier tube de pression (20, 120, 220, 320) et le deuxième tube de pression (22, 122, 222, 322) sont reliés de façon étanche à la pression avec le corps de système de mesure (10, 110, 210, 310), du côté de la surface de raccord process (16, 116, 216, 316), le premier tube de pression (20, 120, 220, 320) et le deuxième tube de pression (22, 122, 222, 322) étant reliés respectivement avec le corps de système de mesure (10, 110, 210, 310), de façon étanche à la pression, par le soudage d'un cordon de soudure (24, 26) périphérique sur le côté de la surface de raccord process (16, 116, 216, 316).

2. Système de mesure hydraulique selon la revendication 1, pour lequel au moins un tube de pression (220, 222) s'étend de façon inclinée dans le corps de système de mesure (210) par rapport à une normale de la surface du raccord process (216).

3. Système de mesure hydraulique selon l'une des revendications précédentes, comprenant en outre :
au moins un premier corps de lit de membrane (332, 333), lequel présente, sur une surface située à l'opposé du corps de système de mesure (310), un lit de membrane plissé, le corps de lit de membrane étant, après la liaison étanche à la pression de l'au moins un tube de pression (320) avec le corps de système de mesure (310), relié par le côté de la surface de raccord process (316) de façon étanche à la pression avec le corps de système de mesure (310).

4. Système de mesure hydraulique selon la revendication 3, pour lequel au moins une membrane de séparation (328, 330) est estampée sur le lit de membrane d'un corps de membrane de séparation (332, 333).

5. Système de mesure hydraulique selon l'une des revendications 1 à 2, pour lequel aucun lit de membrane plissé n'est présent entre au moins une membrane de séparation (28, 30) et l'ouverture d'entrée de pression (12, 14) obturée par la membrane.

6. Capteur de pression différentielle comprenant :
un système de mesure hydraulique selon l'une des revendications précédentes ; et une cellule de mesure de pression différentielle (40, 140, 240, 340),
pour lequel la cellule de mesure de pression différentielle (40, 140, 240, 340) présente un corps de cellule de mesure avec deux chambres de mesure dans son intérieur, qui sont séparées entre elles par une membrane de mesure,
les chambres de mesure présentant chacune une ouverture de chambre de mesure,
une première parmi les chambres de mesure étant raccordée de façon étanche à la pression au premier tube de pression (20, 120, 220, 320) et pouvant être alimentée avec une première pression par l'intermédiaire du premier tube de pression (20, 120, 220, 320),
une deuxième parmi les chambres de mesure étant raccordée de façon étanche à la pression au deuxième tube de pression (20, 120, 220, 320) et pouvant être alimentée avec une deuxième pression par l'intermédiaire du deuxième tube de pression,
la membrane de mesure étant déformable élastiquement en fonction d'une différence entre la première pression et la deuxième pression,
la cellule de mesure de pression différentielle (40, 140, 240, 340) comportant un convertisseur destiné à fournir un signal dépendant de la déformation de la membrane de mesure.

7. Capteur de pression différentielle selon la revendication 6, pour lequel la cellule de mesure de pression différentielle (40, 140, 240, 340) est maintenue par les tubes de pression.

8. Capteur de pression différentielle selon la revendication 6 ou 7, pour lequel les deux tubes de pression (120, 122) présentent chacun une dérivation, une branche d'un tube de pression (120, 122) étant raccordée à l'une des chambres de mesure, et l'autre branche d'un tube de pression présentant une ouverture de remplissage (132, 134) obturable, destinée au remplissage avec un liquide de transmission des volumes du capteur de pression différentielle communiquant avec chacune des ouvertures.

9. Capteur de pression différentielle selon la revendication 6 ou 7, pour lequel le corps de système de mesure (10) présente deux ouvertures de remplissage (32, 34) obturables, parmi lesquelles ouvertures l'une d'entre elle communique avec une ouverture d'entrée de pression, les ouvertures de remplissage étant prévues pour le remplissage avec un liquide de transmission des volumes du capteur de pression différentielle communiquant avec chacune des ouvertures.
